# EUROPEAN PATENT APPLICATION

(11) **EP 1 241 611 A2**
(43) Date of publication of application: **18.09.2002**
(21) Application number: 02251066.3
(22) Date of filing: 16.02.2002
(51) Int. Cl.: G06F 17/60, G06F 17/30

(54) **Storage medium storing program for direct electronic purchasing of online information**

(30) Priority: 13.03.2001 US 804883
(71) Applicant: ALPS ELECTRIC CO., LTD., Ota-ku Tokyo (JP); Alps Electric (North America), Inc., San Jose, California 95138 (US)
(72) Inventor: Umehara, Junichi, Alps Electric Co Ltd, Ota-ku, Tokyo (JP)
(74) Representative: Kensett, John Hinton

(57) **Abstract**

A system and computer-readable storage medium for the online purchase of electronic information wherein electronic information is selected by an end user from an electronic database. The selected information may then be sampled by audio and/or visual means. The end user then pays for the selected electronic information. The electronic information is then received by a user printing device, which prints the electronic information on a medium such as a CD or DVD. A label is then selected by the end user and printed on the medium

## Description

### FIELD OF THE INVENTION

This invention relates to a method and system for purchasing electronic information from an electronic database. For example, the electronic information that may be purchased with the present invention may include audio data such as music and/or video data such as movies or feature films. The electronic information is ordinarily purchased in the form of Compact Disks ("CDs") and Digital Video Disks ("DVDs").

### BACKGROUND OF THE INVENTION

Consumers ordinarily purchase digital audio data such as music in the form of musical CDs. The musical CD typically includes a collection of music selected and arranged by the producer or manufacturer of the CD. For example, a typical musical CD may include a collection of recently released songs by a particular artist. A musical CD may also include a combination of songs from a variety of artists. In either case, the manufacturer or producer of a particular musical CD chooses the selection and arrangement of songs recorded on the CD. The CD is then mass-produced and distributed to retailers for sale to the end user.

Similarly, consumers ordinarily purchase digital audio/video data such as movies or music videos in the form of DVDs. The DVD typically includes a movie, music video or collection of music videos. With respect to a DVD movie, the DVD may also include a collection of additional audio/video data such as movie outtakes or interviews with the director and/or actors of the movie. With respect to DVD music videos, the DVD may include a collection of music videos by a particular artist. In either case, the manufacturer or producer of the DVD chooses the selection and arrangement of audio/video data that is recorded on a particular musical DVD. The DVD is then mass-produced and distributed to retailers for sale to the end user.

This method of manufacturing and distribution of CDs and DVDs has a number of drawbacks. For example, the typical CD or DVD is manufactured or produced without any input from the end user. In other words, the electronic data that is recorded on the CD or DVD is selected by the manufacturer or producer of the CD or DVD, and not by the end user. Moreover, since the typical CD or DVD is mass-produced, the manufacturer or producer often selects the electronic data to be recorded on the CD or DVD that is believed to appeal to a large consumer base. As a result, the end user's selection of pre-recorded electronic data is ordinarily limited to those CDs and DVDs mass-produced by the CD and DVD manufacturer or producer. In other words, the current method of manufacturing and distributing CDs and DVDs does not provide for an end user that wants to purchase a unique selection or arrangement of pre-recorded electronic data.

For example, the end user may want to purchase a music CD recorded with a collection of songs from different artists. These songs, however, may only be available on separate CDs. The end user would then be required to purchase each of the CDs to obtain the desired songs. In addition to the added cost of purchasing several individual CDs, the end user may be required to purchase unwanted songs as a result of purchasing those CDs that include the desired songs.

Another disadvantage with the current method of manufacturing and distributing CDs and DVDs is the need for retailers to maintain an inventory of available CDs and DVDs. This presents a number of problems. First, the retailer will typically purchase from the manufacturer an adequate number of CDs or DVDs to meet the perceived demand for each particular CD or DVD. If the retailer perceives that the demand for a particular CD or DVD will be high, then a large number of CDs or DVDs will need to be purchased. If the retailer has overestimated the demand for a particular CD or DVD, then the retailer may have to absorb the cost of any unsold CDs or DVDs. If the retailer has underestimated the demand for a particular CD or DVD, then the retailer may loose sales as a result of having an inadequate inventory to meet the demand. In any event, the retailer must allocate the space necessary to display the inventory of the CDs and DVDs available for purchase by the end user.

In addition to the above, the current method of manufacturing and distributing CDs and DVDs necessarily entails shipment of the CDs and DVDs from the manufacturer to the retailer. The cost of shipping will necessarily be added to the overall cost of the product, thereby raising the price paid by the end user. Moreover, the need for shipping of the product introduces delay in the availability of the product at the retailer. As a result, the retailer may loose sales due to the inability to quickly obtain the product from the manufacturer.

In view of the disadvantages and problems discussed above, there is a need for an improved method and system for purchasing recorded electronic data that overcomes these disadvantages and problems.

### BRIEF SUMMARY OF THE INVENTION

The present invention provides an improved computer-readable storage medium storing a program for online purchasing of electronic information and system for purchasing recorded electronic data that overcomes the above-referenced disadvantages and problems. In particular, the present invention provides a method and system whereby the end user may select or arrange the electronic information to be recorded on the medium such as a CD or DVD.

In the preferred computer-readable storage medium of the present invention, storing a program for online purchasing of electronic information, electronic information is purchased online by the end user by first selecting the electronic information to be recorded from an electronic database. The selected information may then be sampled by audio and/or visual means. The end user then pays for the selected electronic information. The electronic information is then received by a user printing device, which prints the electronic information on a medium such as a CD or DVD. A label is then selected by the end user and printed on the medium.

The preferred computer-readable storage medium storing a program for online purchasing of electronic information enables the end user, and not the manufacturer, to select the electronic information to be recorded on the medium. For example, the end user may purchase a music CD recorded with a collection of songs from different artists. Alternatively, the end user may purchase a movie DVD that includes interviews with the movie actors, but does not include movie outtakes. The end user may therefore purchase CDs or DVDs with only the recorded electronic information desired by the end user.

The preferred system for online purchasing of electronic information according to the computer-readable storage medium of the present invention, storing a program for online purchasing of electronic information, comprises a database for maintaining the electronic information, a user data-processing system for accessing the database, a user printing device for directly receiving and printing the electronic information on to a medium, and an electronic network for interconnecting the database, the user data-processing system, and the user printing device. For example, the electronic database, which may be maintained by a music wholesaler, could contain music by a number of artists in the form digital audio data. The database is accessed by a data-processing system such as computer. Once the end user has selected and purchased the desired digital audio data, the data is recorded on to a medium such as a CD by a user printing device.

The preferred system of the present invention eliminates the need to inventory individual CDs or DVDs. Instead, the retailer may merely maintain a supply of blank or unrecorded CDs or DVDs. Consequently, CDs or DVDs may be recorded at the time of purchase by the end user, without incurring delay or shipping costs. This system also eliminates the possibility of unsold or out of stock CDs or DVDs.

An electronic network connects the components of the preferred system. This enables the database to be located remotely from the user data-processing system and the user printing device. For example, the data-processing system and printing device would ordinarily be located at a music or video retailer, whereas the database would ordinarily be located at, and maintained by, the music or video producer or wholesaler. Alternatively, the user data-processing system and the user printing device could be maintained by the end user, thereby enabling the end user to purchase electronic information without the intervention of the retailer. The electronic network also provides for the connection of the database to multiple processing systems and the printing devices at various locations.

The preferred embodiment of the present invention includes features in addition to those listed above. Moreover, the advantages over the current art discussed above are directly applicable to the preferred embodiment, but are not exclusive. The other features and advantages of the present invention will be further understood and appreciated when considered in relation to the detailed description of the preferred embodiment.

### BRIEF DESCRIPTION OF SEVERAL VIEWS OF THE DRAWINGS

The present invention is illustrated by way of example and not limitation in the accompanying figures. In the figures, like reference numbers indicate identical or functionally similar elements.

Figure 1 is schematic representation of a preferred embodiment of the system for online purchasing of electronic information according to the present invention; and

Figure 2 is schematic representation of a preferred embodiment of the method for online purchasing of electronic information according to the present invention.

### DETAILED DESCRIPTION OF THE INVENTION

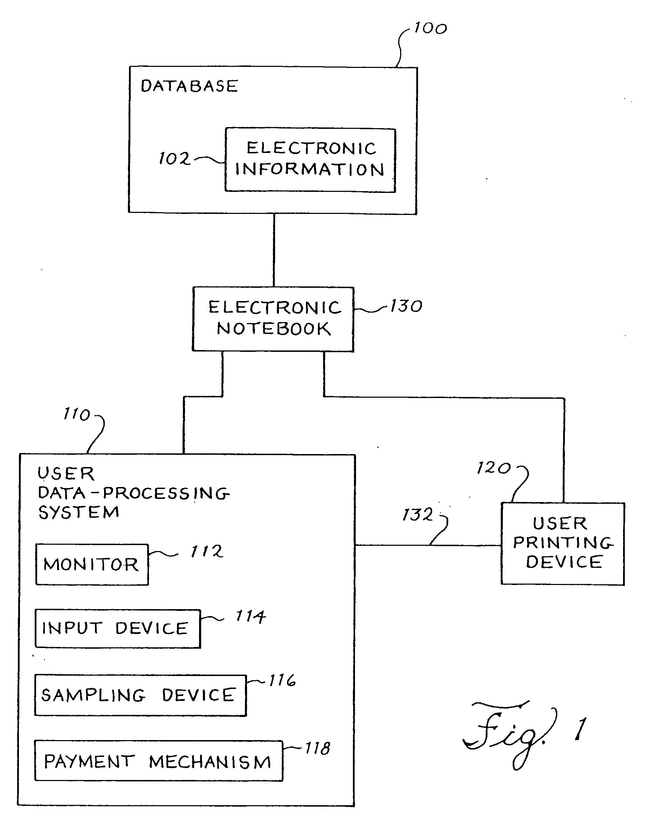

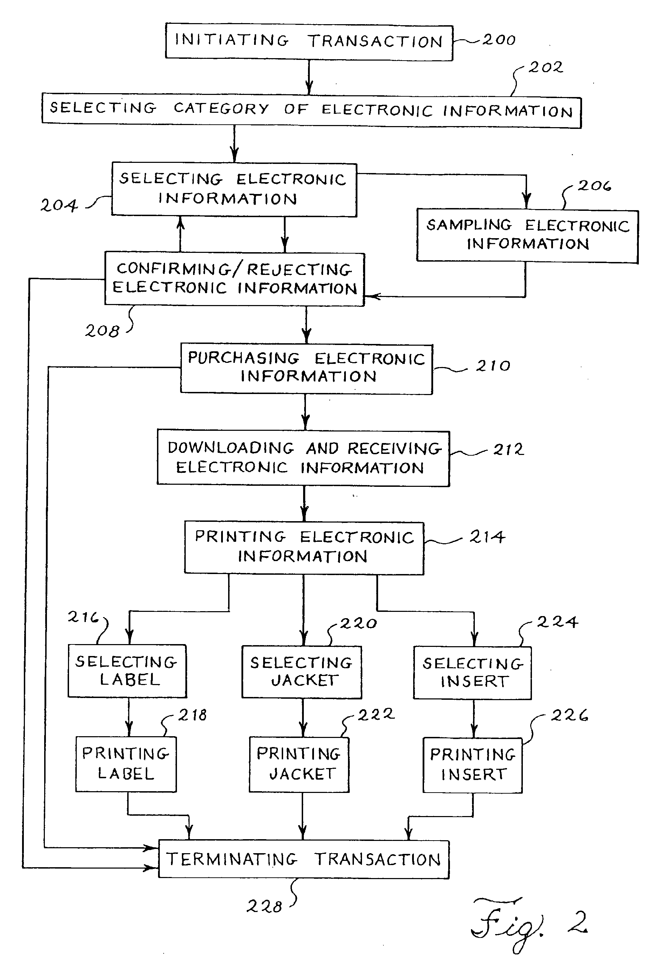

According to the preferred embodiment of the present invention, a system and method for online purchasing of electronic information are disclosed in reference to Figures 1 and 2. Figure 1 is schematic representation of a preferred embodiment of the system for online purchasing of electronic information. Figure 2 is schematic representation of a preferred embodiment of the method for online purchasing of electronic information.

As best seen in Fig. 1, the electronic information 102 that is available for purchase by the end user is stored on a database 100. The database 100 is ordinarily maintained by the owner of the electronic information 102. The database 100 may also be maintained by a wholesaler, licensor or agent of the owner. By way of example, the database 100 may contain music in the form of digital audio data. In particular, the database 100 may include songs performed by various artists. By way of a second example, the database 100 may contain movies in the form of digital audio/video data. In particular, the database 100 may contain a collection of movies or music videos, which would necessarily include digital audio data as well.

Referring to Fig. 1, the electronic information 102 is accessed by the end user through a user data-processing system 110. In the preferred embodiment, the data-processing system 110 comprises a stand-alone computer system located at a retailer. Alternatively, the data-processing system 110 may comprise a computer system maintained by the end user. In the preferred embodiment, the computer system includes a monitor 112, an input device 114, a sampling device 116 and a payment mechanism 118.

The monitor 112 displays instructions, information or other data to the end user. The design and function of the monitor 112 is within the scope of those skilled in the art.

The input device 114 may include a keyboard and/or a plurality of button or switches. The input device 114 may also include a mouse, a trackball, a pointing device, including a touch panel, a key switch or a scanner. As will be described in more detail below, the end user utilizes the input device 114 to make selections of electronic information 102 to be purchased from the database 100. The input device 114 is also used to issue commands necessary to carry out the method of purchasing the electronic information 102. The input device 114 may also be used by the end user to provide data or information during the method of purchasing the electronic information 102.

The sampling device 116 may include speakers or a headset through which audio data can be heard and LCD or other displays through which visual data can be shown. As will be described in more detail below, the sampling device 116 enables the end user to physically hear and watch samples of selected electronic information 102. The sampling device 116 may also provide a mechanism for communication of audible instructions, commands or information to the end user during the method of purchasing the electronic information 102.

The payment mechanism 118 provides a method of payment by the end user for the purchase of the electronic information 102. For example, the payment mechanism 118 may include a credit card, ATM or other card reader capable of reading information from the end user's credit card. Alternatively, the payment mechanism 118 may include a device capable of accepting e-cash and/or electric check, paper or coin currency. As will be described in more detail below, the purchase of electronic information 102 requires payment by the end user to complete the transaction.

Referring to Fig. 1, the electronic information 102 purchased by the end user is received by a user printing device 120. The user printing device 120 is capable of downloading or receiving the electronic information 102, and recording or printing the electronic information 102 on to a medium that is provided to the end user as part of the transaction. For example, the user printing device 120 may be capable of recording electronic information 102 on to a CD or a DVD. The user printing device 120 may also be capable of printing visual information such as labels, jackets or inserts. In the preferred system, the user printing device 120 is located at the retailer and may be combined with the user data-processing system110.

Referring to Fig. 1, the database 100, the user data-processing system 110 and the user printing device 120 are connected together by an electronic network 130. The primary function of the electronic network 130 is to facilitate the transfer of electronic information 102, commands and other data between each of these components. The electronic network 130 may comprise hard-wired connections, such as computer cables, between these devices, or may comprise connections utilizing telephone cables, satellite transmissions and/or the Internet. The electronic network 130 may also include supplemental connections between each of the devices. For example, the user data-processing system 110 and the user printing device 120 may be hard-wired together by computer cables 132, whereas each of these components may be connected to the database 100 via the Internet. It will be recognized by those skilled in the art that the connection between these components may be through any suitable transmission medium, such as an electrical, optical or wireless medium.

The system for online purchasing of electronic information 102 may also include computer software capable of storing, analyzing and/or generating purchasing information regarding the end users and end user purchasing patterns. This purchasing information may be useful in determining the type of electronic information 102 that should be maintained on the database 100. Purchasing information may also be necessary for the tracking and payment of licensing fees or royalties associated with the sale of the electronic information 102.

The preferred method for online purchasing of electronic information 102 is schematically represented in Fig. 2. By way of example, the preferred method will be described in connection with the purchase of a collection of music to be digitally recorded on a CD. It should be understood, however, that the preferred method is equally applicable to the purchase of other types of electronic information 102 on other types of medium. For example, the purchase of movies and feature films on DVDs, or computer programs on CDs or computer disks.

In the first step 200 of the preferred method, the end user accesses the database 100 through the user data-processing system 110. In particular, the end user begins by reading instructions displayed on the monitor 112 of the computer system. These instructions would ordinarily include an explanation of the online purchasing transaction, including the cost of the transaction. After the instructions have been displayed, the monitor 112 displays categories of electronic information 102 available for purchase from the database. These categories may include, for example, lists of electronic information 102 by title, artist, or latest releases.

In the next step 202, the end user selects a category of electronic information 102 by indicating the selection through an input device 114 on the computer system. For example, the end user may select as a category of electronic information 102 music by a particular artist, the selection being made by typing the name of the artist on the keyboard of the input device 114. Other types of example categories may include "Country & Western Classics," "This Week's Hot Chart" or "Introduction To Music." After the category is selected, the monitor 112 displays the available choices for the selected category. In this example, the monitor displays 112 a list of songs, or collections of songs, performed by the selected artist.

In the next step 204, the end user selects one or more of the available choices for sampling or purchase. For example, the end user may select a specific song performed by the artist. Alternatively, the end user may select a collection of songs offered as a package. The collection of songs, for example, may be a specific album produced by the artist. The end user may also select a compilation of songs by different artists arranged by subject or a theme such as "Hits of the 50's".

After a song or compilation of songs has been selected, the end user has the option of sampling the selection in step 206. A sample of the song or compilation, in the form of digital audio data, is then transferred, via the electronic network 130, from the database 100 to the user data-processing system 110 whereby it can be listened to by the end user through the speakers or headphones of the sampling device 118.

Following the sampling of the selection, the end user confirms or rejects the selection of electronic information 102 in step 208. The end user then has the option of sampling and/or purchasing another selection from either the same category or from a different category. This process may be continued at the discretion of the end user until the end user has completed the selection process or elected to terminate the transaction without a purchase.

It should be understood that it is not necessary for the end user to sample any of the selections, but may instead proceed directly from the selection step 204 to the step 208 of confirming or rejection the selection.

Following the selection process, the end user remits a payment for the purchase of the selected electronic information 102 in step 210. In the preferred embodiment, the end user authorizes payment for the purchase through a credit or debit card. In the preferred embodiment, the end user inserts or "swipes" a credit card though a credit card reader (i.e., payment mechanism 118) provided on the data-processing system 110. The credit card reader accesses the information contained on a magnetic strip on the credit card and processes the transaction. The details of the credit card operation are within the scope of those skilled in the art of credit card transactions and therefore will not be discussed in detail.

Alternatively, the end user may pay for the purchase by inserting paper currency into an appropriate payment mechanism 118 or device on the data-processing system 110. The end user may also pay for the purchase through a separate transaction not connected with the data-processing system 110. For example, the data-processing system 110 may generate an invoice for the purchase (which may alternatively be printed by the user printing device 120). The end user then pays the invoice amount to the retailer that is hosting or maintaining the data-processing system 110.

Once payment for the purchase of the selected electronic information is authorized or completed, the selected electronic information is transferred or downloaded from the database 100 to the user printing device 120 in step 212. In this example of the preferred embodiment, the user printing device 120 comprises a CD recording device that is capable of recording or "burning" the selected electronic information 102 (e.g., music in the form of digital audio data) onto a blank CD. After the electronic information 102 has been received, the user printing device 120 records the information on the CD in step 214.

Following the recordation of the CD, the end user has several options regarding the selection and/or printing of data relating to the purchased electronic information 102. For example, the end user may elect to have data in the form of a label printed on the surface of the CD. As referenced in step 216, the label may be a pre-selected design stored in the database 100 and offered in connection with the purchased electronic information 102 (e.g., a label selected by the artist of songs purchased). Pre-selected label designs available to the end user are displayed on the monitor 112 of the user data-processing system 110. The end user may also have the option of altering or customizing the pre-selected label by, for example, including the name or picture of the end user. The end user may elect to include this information on the CD for identification purposes or to personalize the CD. To add the end user's name to the CD label, the end user types the name on the keyboard of the input device 114. A picture can be added to the label through the use of a scanner or other input device 114. The input device 114 can also be used to manipulate the data or information to be printed on the label. For example, computer software on the data-processing system 110 may enable the end user to create unique label designs.

Once the end user has completed the process of selecting a label in step 216, the user printing device prints the label for the CD in step 218. This may be accomplished by printing the label directly on the CD, or by printing a separate self-adhesive label that can be affixed to the CD by the end user.

The end user may similarly select and print a jacket and/or inserts for the CD case in steps 220, 222, 224 and 226. For example, the end user may elect to print lyrics of the songs purchased, or biographical information for the artist of the songs. If so, then the end user utilizes a process similar to the process described in connection with the selection and printing of labels.

Once the printing the label, jacket and any inserts is complete, the purchase transaction is completed in step 228. At this time, the end user is ordinarily provided with a receipt or invoice for the purchased electronic information 102. In the preferred embodiment, the receipt or invoice is generated by the user printing device 120.

It should be appreciated that many of the above-referenced steps can be performed in any order without departing from the method of the present invention. For example, the step 210 of paying for the purchase of the electronic information 102 can be deferred until after the label, jacket and any inserts are selected and printed in steps 216, 218, 220, 222, 224 and 226. This would permit fees to be charged for some or all of these printing operations.

It should also be understood that many steps incidental or ancillary to the method of the present invention have been deleted from the above description for the purpose of clarity. However, such incidental or ancillary steps are within the knowledge of those skilled in the art of.

Although the above-described method has been described in connection with the purchase of music or movies, it should be noted that the method and system of the present invention is applicable to the purchase of any type of electronic information. For example, the method and system of the present invention can be used for the purchase of computer software or games.

## Claims

1. A computer-readable storage medium storing an electronic information online purchase program for executing the steps of:
a) selecting said electronic information in a database which is connected to an electronic network from a computer system of an end user via said electronic network;
b) paying a price for said electronic information on said electronic network from said computer system of said end user;
c) said end user directly receiving said electronic information by a user printing device connected to said electronic network; and
d) printing said electronic information on a medium by said user printing device.

2. The storage medium of claim 1 further including the step of:
e) sampling said electronic information by a sampling device provided in said computer system of said end user.

3. The storage medium of claim 1 further including the step of:
e) selectively mixing, ordering, and processing a plurality of electronic information selected by said computer system of said end user.

4. The storage medium of claim 3 further including the step of:
f) selectively labeling and processing said electronic information.

5. The storage medium of claim 1 further including the step of:
e) printing a user-selected label on said medium by said user printing device.

6. The storage medium of claim 5 wherein said label includes concert information.

7. The storage medium of claim 1 further including the step of:
e) printing a jacket for said medium by said user printing device.

8. The storage medium of claim 7 further including the step of:
f) printing a user-selected label on said jacket.

9. The storage medium of claim 5 or 8 wherein said label includes a photo.

10. The storage medium of claim 5 or 8 wherein said label includes a title.

11. The storage medium of claim 5 or 8 wherein said label includes music lyrics.

12. The storage medium of claim 5 or 8 wherein said label includes a video scene.

13. The storage medium of claim 1 wherein said electronic information comprises music data.

14. The storage medium of claim 13 wherein the step of selecting said electronic information includes the step of selecting a category of music data.

15. The storage medium of claim 13 wherein the step of selecting said electronic information music data includes the step of selecting a title of said music data.

16. The storage medium of claim 13 wherein the step of selecting said electronic information music data includes the step of selecting an artist of said music data.

17. The storage medium of claim 13 wherein the step of selecting said electronic information music data includes the step of selecting a new release of said music data.

18. The storage medium of claim 1 wherein said electronic information comprises video data.

19. The storage medium of claim 18 wherein the step of selecting said electronic information includes the step of selecting a category of said video data.

20. The storage medium of claim 18 wherein the step of selecting said electronic information includes the step of selecting a title of said video data.

21. The storage medium of claim 18 wherein the step of selecting said electronic information includes the step of selecting a director of said video data.

22. The storage medium of claim 18 wherein the step of selecting said electronic information includes the step of selecting a producer of said video data.

23. The storage medium of claim 18 wherein the step of selecting said electronic information includes the step of selecting a new release of said video data.

24. The storage medium of claim 1 wherein the step of paying for said electronic information comprises paying with a credit card.

25. The storage medium of claim 1 wherein the step of receiving said electronic information comprises receiving said electronic information by a user printer, or user CD-machine, or via an electronic network.

26. The storage medium of claim 1 wherein the step of receiving said electronic information comprises receiving said electronic information via the Internet.

27. A system for online purchasing of electronic information, said system comprising:
a) a database for maintaining said electronic information;
b) a user data-processing system for accessing said database;
c) a user printing device for directly receiving and printing said electronic information on a medium; and
d) an electronic network for interconnecting said database, said user data-processing system, and said user printing device.

28. The system according to claim 27 wherein said database comprises a distributed database.

29. The system according to claim 27 wherein said printing device comprises a user printer.

30. The system according to claim 27 wherein said printing device comprises a user CD-machine.

31. The system according to claim 30 wherein said medium includes CD-ROM.

32. The system according to claim 27 wherein said electronic network includes the Internet.
